# EUROPEAN PATENT APPLICATION

(11) **EP 4 708 577 A1**
(43) Date of publication of application: **11.03.2026**
(21) Application number: 25186994.7
(22) Date of filing: 02.07.2025
(51) Int. Cl.: H01R 11/01, H01R 4/20, H01R 11/09, H01B 9/00

(54) **ELECTRICAL CABLE MECHANICAL CONNECTOR AND METHOD OF CONNECTING AN ELECTRICAL CABLE TO A MECHANICAL CONNECTOR**

(30) Priority: 10.09.2024 IT 202400020098
(71) Applicant: Prysmian S.p.A., 20126 Milan (IT)
(72) Inventor: TSAKONAS, Panagiotis, 2627 AN Delft (NL)
(74) Representative: Praxi Intellectual Property Milano

(57) **Abstract**

The present disclosure relates to an electrical cable mechanical connector (1) in the form of a substantially cylindrical body having a longitudinal axis (X-X) and comprising a solid connecting portion (2) and at least one fitting space (4), defined by a peripheral wall (9), as open end of the mechanical connector (1) for inserting an end portion of an electric conductor (101) of at least one electrical cable, wherein the at least one fitting space (4) is divided in a plurality of longitudinal channels (3), each channel being open for the insertion with contact of a respective fraction (102) of the electric conductor (101) end portion.

## Description

### BACKGROUND

### Technical field

The present disclosure relates to the field of mechanical connectors for establishing an electrical and mechanical connection between two electrical cables or between an electrical cable and an accessory, such as a cable joint or a cable termination.

### Description of the Related Art

Typically, mechanical connectors for the connection of electrical cables comprise a cylindrical ferrule that is mechanically connected to the cable conductor inserted therein by means of crimping or shear bolts. However, these types of connectors are limited in applications by the size of the conductor and the available space inside the accessory or for the joint. For large conductors (i.e., for conductors having a cross-section greater than 2,500 mm², which are generally used for High Voltage HV or Extra High Voltage EHV cables), the ferrule size increases a lot and cannot be accommodated in the limited space of existing cable accessories. In particular, the ferrule may need to be longer for having more compression points and/or wider in the inner diameter to fit the cable conductor section and/or thicker to provide a sufficient cross-sectional area to make the current flow without generating heat losses. This would require redesigning the whole cable accessory in order to accommodate the large size of the connectors. Additionally, deformation of a thicker ferrule may be difficult, and the compression may be not sufficiently effective to hold the conductor.

An example of a mechanical connector is given in US 9,887,508, which relates to a method for electrically connecting the electrical conductors of two high voltage cables, each including a conductor constructed as a Milliken conductor surrounded by a casing of insulating material, in which a pipe piece of metal is used which is provided over its entire length and distributed over its circumference with a plurality of through-holes provided with a thread for receiving securing screws.

As an alternative, connection of large conductors, for example aluminium conductors, may be done by welding. However, welding requires specialized jointers and poses a fire hazard in the installation environment. Additionally, for large conductors the heat produced may damage the cable insulation.

US 11,909,161 aims at solving the problem of joining cables by welding or by mechanical connector and relates to a device and method for treatment of power cable ends, especially termination and joining of multi-stranded cables. The cable treatment device comprises an affixing means for reversibly securing to a circumference of a power cable, a kinematic means having attachment means for attaching to the affixing member, said kinematic means being adapted to provide kinematic motion relative to said attachment means, the kinematic motion being fully controllable through a plurality of force input connections, and a tooling means attached to said kinematic means, said tooling means adapted to receive said kinematic motion.

### SUMMARY OF THE INVENTION

The Applicant therefore aims at providing an electrical cable mechanical connector which is compact and is capable of fitting to the existing HV or EHV cable accessories and without increasing its size.

The Applicant has found that dividing a cable conductor fitting space of a mechanical connector into sectors separated by partition walls, dividing the cable conductor into fractions in the same number as the sectors, and inserting each conductor fraction into a respective sector of the connector, the contact surfaces of the connector with the cable conductor increase without the need of increasing the fitting space thickness. Accordingly, it is possible to mechanically couple the connector to the conductor in a manner effective for establishing a good electrical contact, while at the same time maintaining the connector compact in size, so that it can fit inside existing cable accessories or joints.

Accordingly, the present disclosure relates to an electrical cable mechanical connector in the form of a substantially cylindrical body having a longitudinal axis and comprising a solid connecting portion and at least one fitting space, defined by a peripheral wall, as open end of the mechanical connector for inserting an end portion of an electric conductor of at least one electrical cable, wherein the at least one fitting space is divided in a plurality of longitudinal channels, each channel being open for the insertion with contact of a respective fraction of the electric conductor end portion. The solid connecting portion can be flanked by the at least one fitting space.

In an embodiment, the channels of the present mechanical connector have substantially the same shapes and dimensions.

In an embodiment, the mechanical connector of the present disclosure comprises from two to eight channels.

In an embodiment, the channels are uniformly distributed around a longitudinal, central axis of the mechanical connector. The channels may extend parallel to or be helicoidally twisted around said central axis.

In a cross-section perpendicular to this longitudinal axis, the plurality of channels defines a plurality of sectors separated by partition walls and delimited by the peripheral wall of the mechanical connector.

In an embodiment, the partition walls extend radially between the longitudinal axis and the peripheral wall. The peripheral wall has a substantially circumferential cross section centred on the longitudinal axis, and the sectors are shaped as circular sectors.

In an embodiment, the partition walls longitudinally protrude from the solid connecting portion.

In an embodiment, at the open end of the present mechanical connector, the partition walls and the sections of the peripheral wall delimiting the sectors have chamfered contours to ease the insertion of the cable conductor fractions into the channels.

In an embodiment, the partition walls join at a central rod extending along the longitudinal axis. The central rod may extend from the solid connecting portion.

**In** an embodiment, the central rod protrudes with respect to the peripheral wall along the central longitudinal axis. In this case the partition walls are inclined from the peripheral wall to the longitudinal axis to extend beyond the peripheral wall along the longitudinal axis.

In an embodiment, in correspondence of at least one open end of the present mechanical connector the central rod comprises a central indentation. This indentation is suitable for housing a central portion of the cable conductor end.

In an embodiment, the peripheral wall of the fitting space is deformable by compression, e.g. via crimping, to lock each fraction of the conductor inside the respective channel.

In another aspect, the present disclosure relates to a method of mechanically and electrically connecting an electrical cable end portion to a mechanical connector, the method comprising the steps of:
- exposing a cable conductor end portion;
- dividing the exposed conductor end portion into a number of conductor fractions corresponding to a number of channels extending within a fitting space of the mechanical connector;
- inserting with contact each conductor fraction into the respective channel;
- establishing a mechanical and electric connection between the mechanical connector and the conductor fractions within the channels.

In an embodiment, the cable conductor is a Milliken conductor comprising a plurality of electrically conductive sectors. In this case, the present mechanical connector can be provided having the same number of channels as of the cable conductor sectors or one or at least one conductor sector can be divided so to occupy all the channels of the mechanical connector. In another embodiment, the cable conductor is made of a bundle of metal wires, said bundle being divided into a number of sub-bundles to be inserted into the channels and occupy them all. In all the cases, all of the channels of the fitting space should be occupied by a respective fraction of the cable conductor.

In an embodiment, the cable conductor is a Milliken conductor further comprising a central core element. In this case, the method further comprises the step of lodging an end of the cable central core element into an indentation of a central rod of the mechanical connector.

In an embodiment, the step of establishing a mechanical and electric connection comprises radially pressing from outside a peripheral wall of the mechanical connector, locally or uninterruptedly, e.g. by crimping, in at least one compression zone. In case of multiple compression zones, they may be distributed substantially along a longitudinal axis of the mechanical connector.

In an alternative embodiment, the step of establishing a mechanical and electric connection may be performed by inserting shear bolts into holes of the peripheral wall.

### BRIEF DESCRIPTION OF THE DRAWINGS

Further characteristics and advantages will be more apparent from the following description of some embodiments given as a way of an example with reference to the enclosed drawings in which:
Figure 1 is a perspective partial view of an electrical cable mechanical connector according to an embodiment of the present disclosure;
Figure 2 is a side view of the connector in Figure 1;
Figure 3 is a sectional view taken along a plane including the longitudinal axis X-X of the connector in Figure 1;
Figure 4 is a perspective partial view of the connector according to another embodiment of the present disclosure;
Figure 5 is a perspective view, partially in transparency, of the connector according to an embodiment, coupled to a Milliken conductor;
Figure 6 is a sectional view of a Milliken conductor;
Figures 7a-7d show exemplary steps for mechanically and electrically connecting an electrical cable end portion to a mechanical connector according to an embodiment of the method of the present disclosure;
Figures 8a-8b and 9a-9d show a comparison between the current flows in a mechanical connector according to the prior art and in a mechanical connector according to the present disclosure, respectively;
Figures 10a-c show sketches of examples of the present mechanical connector.

### DETAILED DESCRIPTION

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

For the purpose of the present description and of the appended claims, the words "a" or "an" are used to describe elements and components of the invention. This is done merely for convenience and to give a general sense of the invention. In this description and claims should be read to include one or at least one and the singular also includes the plural unless it is obvious that it is meant otherwise.

The present disclosure, in at least one of the aforementioned aspects, can be implemented according to one or more of the following embodiments, optionally combined together.

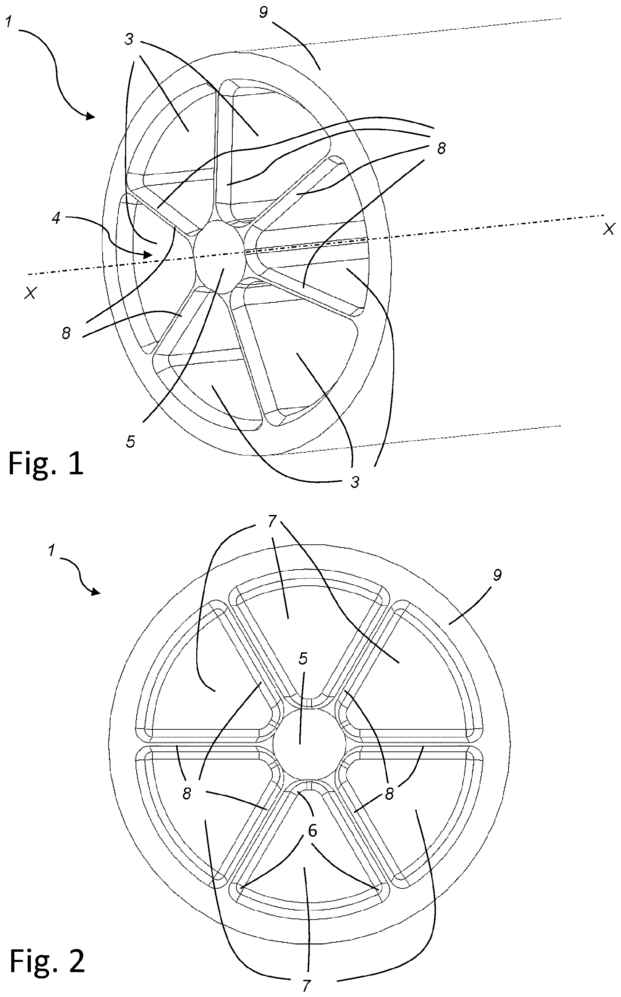

Figures 1-5 show some embodiments of a mechanical connector 1 according to the present disclosure. The mechanical connector 1 is in the form of a substantially cylindrical body comprising a solid connecting portion 2 flanked by at least one fitting space 4 for the electric connection of the end portion of an electric conductor 101 of an electric cable. To this purpose, any cable layers surrounding the electric conductor 101, such as screens or electrically insulating sheaths, are removed at the end portion. The cable conductor 101, for example made of copper or aluminium, can be e.g. of the Milliken type or made of stranded wires. The mechanical connector of the present disclosure may be used even for connecting electric cables with a conductor cross-section equal to or greater than 2,500 mm².

The mechanical connector 1 extends longitudinally along an axis X-X (also referred to as longitudinal and central axis X-X). The mechanical connector 1 is electrically conductive and can be made, e.g., of a metal such as aluminium.

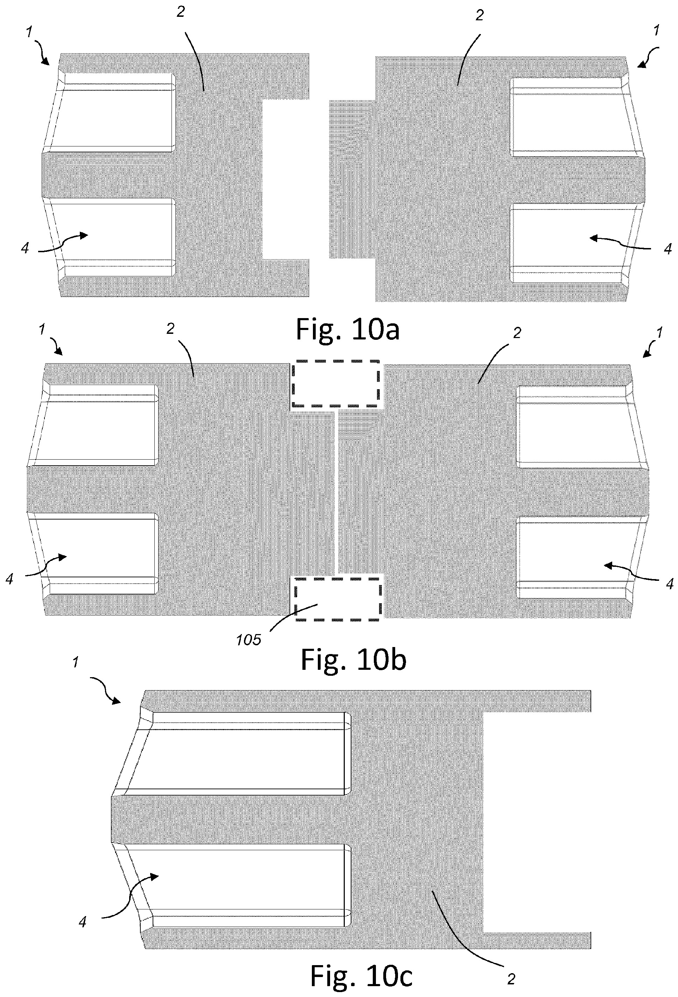

When the mechanical connector 1 is part of a cable joint, it can comprise one connecting portion 2 and two opposite fitting spaces 4 for connecting two conductors of two distinct cable end portions. Alternatively, two mechanical connectors 1 can be used, one for each of the two cables to be joined, and their connecting portions 2 can be joined with a female/male connection (as from Figure 10a) or with a male/male connection (as from Figure 10b) plus a ferrule 105.

When the mechanical connector 1 is part of an accessory, such as a cable termination, it can comprise a single fitting space 4 according to the present disclosure and one standard fitting space designed to fit the metallic conductor embedded in the accessory insulator on the other side of the connecting portion 2 (as from Figure 10c). Also for this application, two mechanical connectors can be used and joined as exemplified above, in this case only one of the mechanical connectors is according to the present disclosure.

In the following a mechanical connector 1 with a single fitting space 4 will be described, just for the sake of simplicity.

The fitting space 4 is divided into a plurality of channels 3 extending parallel to the longitudinal axis X-X from the connecting portion 2, each channel 3 leading to one open end and a blind end at the connecting portion 2, opposite to the open end. In a cross-section perpendicular to the longitudinal axis X-X of the mechanical connector 1, the plurality of channels 3 defines a plurality of sectors 7 (see Fig. 2) separated by partition walls 8 and delimited by a peripheral wall 9.

**The** partition walls 8 radially extend from the longitudinal axis X-X, which is a central axis, to the peripheral wall 9, circumferentially surrounding the axis X-X. Accordingly, the sectors 7 are substantially shaped as circular sectors. In an embodiment, the angles 6 of each of the circular sectors 7 are rounded.

In an embodiment, the channels 3 have substantially the same shapes and dimensions and may be equally distributed around the longitudinal axis X-X. The channels/sectors may be in a number comprised between 2 and 8, for example 6, as depicted in the Figures.

In the present embodiment, the partition walls 8 extend along the longitudinal axis X-X from the connecting portion 2.

In the present embodiment, the partition walls 8 join at a central rod 5 extending along the longitudinal axis X-X. In the present embodiment the central rod 5 protrudes from the solid connecting portion 2.

In an embodiment, at the open end of the mechanical connector 1 the partition walls 8 and the portions of peripheral wall 9 connecting two consecutive partition walls 8 are chamfered to ease the insertion of the conductor 101 at the channels open ends 5.

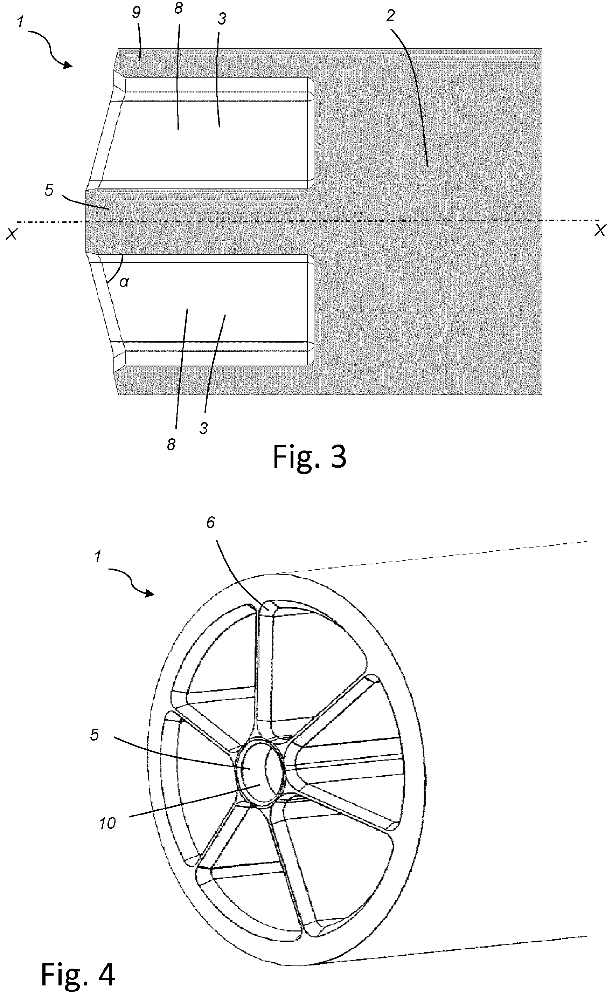

In an embodiment, the partition walls 8 are inclined from the peripheral wall 9 to the longitudinal axis X-X to extend beyond the peripheral wall 9 along the longitudinal axis X-X. In other words, at the open end of the mechanical connector 1 the partition walls 8 form an angle α lower than 90° with the axis X-X, as from Figure 3.

In an embodiment, the end of the central rod 5 is flat (Figures 1-3). In another embodiment, the end of the central rod 5 comprises a central indentation 10 which can have a circular profile (Figure 4), whose function will be clarified in the following.

**The** channels 3 of the mechanical connector 1 can accommodate fractions of the exposed electric conductor 101.

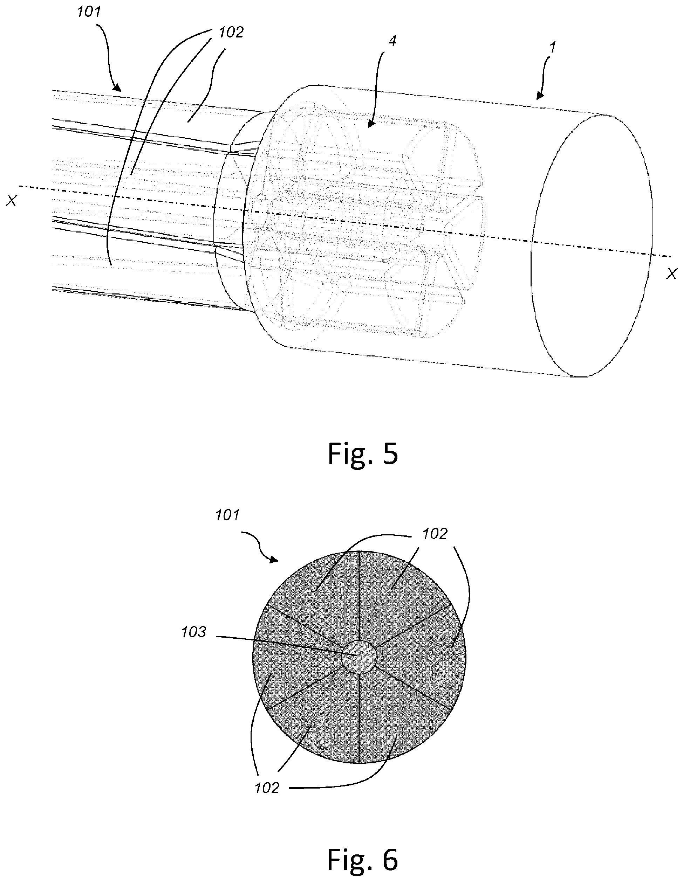

Considering, for example, the case of a Milliken conductor (see e.g. Figures 5-6), it comprises a plurality of wedge-shaped (viewed in cross-section) electrically conductive sectors 102 and can further comprise a central core element 103. The end portion of each of the sectors 102 can be inserted into a respective channel 3 of the connector 1, having substantially the same shape and dimension as the electrically conductive sectors 102. The end of the central core element 103 can be inserted into the central indentation 10 of the mechanical connector 1, when present.

In case of a stranded conductor (not shown in the Figures), it can be portioned in a plurality of sub-portions of conductor, which, in turn, can be inserted into the respective channels 3 of the connector 1.

Once the ends of the Milliken conductor sectors/stranded conductor sub-portions are positioned inside the respective channels 3, they can be blocked therein by compressing and deforming the mechanical connector 1, for example by applying a radial pressure on the peripheral wall 9 where it surrounds the fitting space/s 4, resulting in a radial deformation of the same. The radial compressions can be applied locally (i.e., in a number of discrete points) or continuously, in one or more longitudinal positions of the mechanical connector 1, for example at the fitting space/s 4, along the axis X-X, using standard compression techniques, such as crimping, or by shear bolts inserted in holes in the peripheral wall 9.

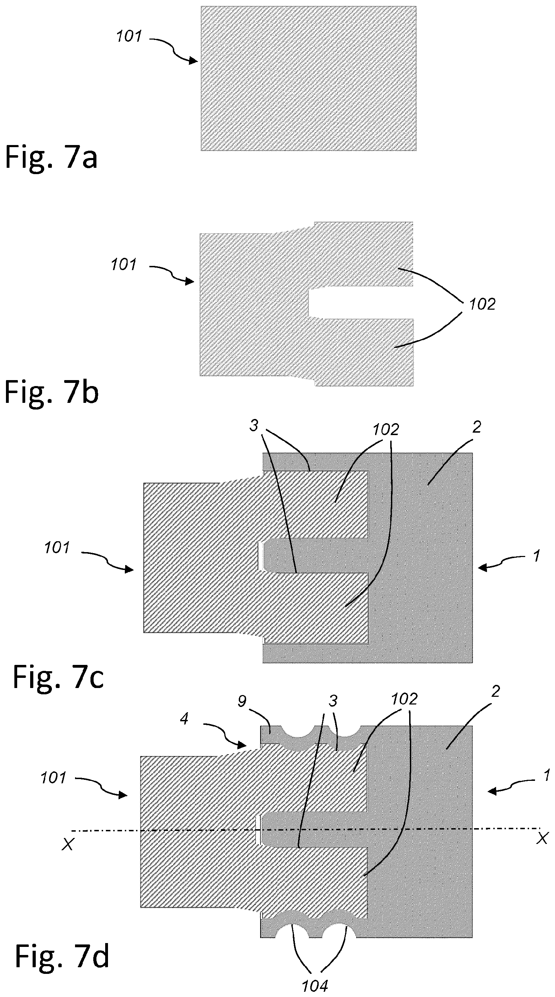

Accordingly, with reference to Figures 7a-7d, a method of mechanically and electrically connecting a cable end portion to a mechanical connector according to the embodiments described above comprises the steps of:
- exposing an end portion of a cable conductor 101, such as a stranded conductor or a Milliken-type conductor (Figure 7a);
- dividing the exposed conductor 101 end portion into a number of fractions, for example the sectors 102 of the Milliken-type conductor, or the sub-portions of the stranded conductor, corresponding to the number of channels 3 within the fitting space 4 of the mechanical connector 1 (Figure 7b);
- inserting with contact each conductor fraction into the respective channel 3 (Figure 7c);
- establishing a mechanical and electric connection between the mechanical connector 1 and the conductor fractions within the channels 3, for example the peripheral wall 9 surrounding the fitting space/s 4 may be crimped locally or continuously in one or more compression zones 104 distributed longitudinally along the axis X-X (Figure 7d), or inserting shear bolts, into holes in the peripheral wall 9.

In case the mechanical connector 1 is part of a cable joint for mechanically and electrically connecting two cable conductors, the mechanical connector 1 comprises a second fitting space flanking the connecting portion 2, and the method further comprises repeating the above-mentioned steps for mechanically and electrically connecting the second cable conductor to the channels of the second fitting space of the connector.

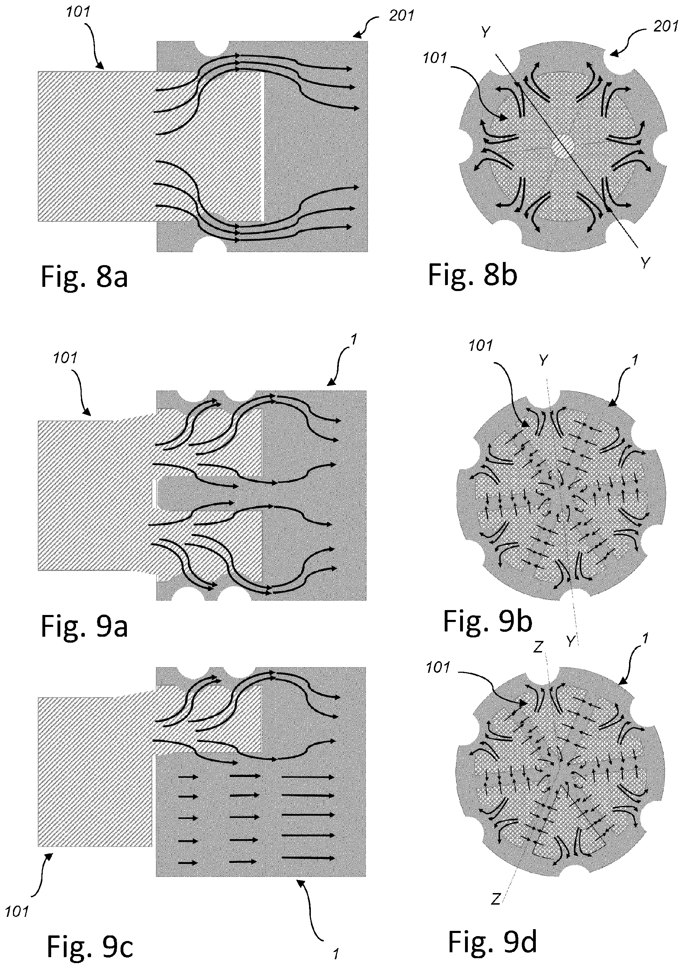

Figures 8a-8b show schematically the current flows in different cross-sections of a mechanical connector 201 according to the prior art. Figure 8b shows a cross-section transversal to the conductor 101 longitudinal axis and Figure 8a shows a cross-section taken along axis Y-Y in Figure 8b. In the prior art mechanical connector, when the cable is energized, some current may leaks out of the conductor into the mechanical connector. If the peripheral wall of the mechanical connector is not properly thick, the current density may increase up to causing overheating and also safety problems. This inconvenience may be avoided by increasing the dimensions (thickness) of the mechanical connector, but this is undesired for the reasons already mentioned above.

Figures 9a-9d show the current flows in different cross-sections of a mechanical connector according to the present disclosure. In particular, Figures 9b and 9d show a cross-section transversal to the longitudinal axis X-X, whereas Figure 9a shows a cross section on a plane taken along axis Y-Y in Figure 9b and Figure 9c shows a cross section along a plane taken along axis Z-Z in Figure 9d. The Figures show that, due to the increased contact surfaces among the conductor fractions and the mechanical connector of the present disclosure, current flow is efficiently distributed avoiding any potential leakage.

## Claims

1. An electrical cable mechanical connector (1) in the form of a substantially cylindrical body having a longitudinal axis (X-X) and comprising a solid connecting portion (2) and at least one fitting space (4), defined by a peripheral wall (9), as open end of the mechanical connector (1) for inserting an end portion of an electric conductor (101) of at least one electrical cable, wherein the at least one fitting space (4) is divided in a plurality of longitudinal channels (3), each channel being open for the insertion with contact of a respective fraction (102) of the electric conductor (101) end portion.

2. The connector (1) of claim 1, wherein the channels (3) have substantially same shapes and dimensions.

3. The connector (1) of claim 1, wherein the channels of the plurality of channels (3) are from 2 to 8.

4. The connector (1) of claim 1, wherein, in a cross-section perpendicular to the longitudinal axis (X-X), the plurality of channels (3) defines a plurality of sectors (7) divided by partition walls (8) and delimited by the peripheral wall (9).

5. The connector (1) of claim 1, wherein the channels (3) are uniformly distributed around the longitudinal axis (X-X).

6. The connector (1) of claim 4, wherein the partition walls (8) radially extend from the longitudinal axis (X-X) to the peripheral wall (9).

7. The connector (1) of claim 4, wherein the partition walls (9) and the sections of the peripheral wall (9) delimiting the sectors (7) have chamfered contours.

8. The connector (1) of claim 4, comprising a central rod (5) extending along the longitudinal axis (X-X), the partition walls (8) radially extending from the central rod (5) to the peripheral wall (9).

9. The connector (1) of claim 8, wherein the central rod (5) comprises a central indentation (10).

10. The connector (1) of claim 1, wherein the solid connecting portion (2) is flanked by the at least one fitting space (4).

11. A method of mechanically and electrically connecting an electrical cable end portion to a mechanical connector (1), the method comprising the steps of:
- exposing a cable conductor (101) end portion;
- dividing the exposed cable conductor (101) end portion into a number of conductor fractions (102) corresponding to a number of channels (3) extending within a fitting space (4) of the mechanical connector (1);
- inserting with contact each conductor fraction (102) into the respective channel (3);
- establishing a mechanical and electric connection between the mechanical connector (1) and the conductor fractions (102) within the channels (3).

12. The method of claim 11, wherein all of the channels (3) of the fitting space (4) are occupied by a respective fraction (102) of the cable conductor (101).

13. The method of claim 11, wherein, when the cable conductor (101) is a Milliken conductor comprising a central core element (103), the method further comprises the step of lodging an end of the central core element (103) into an indentation (10) of a central rod (5) of the connector (1).

14. The method of claim 11, wherein the step of establishing a mechanical and electric connection comprises radially pressing from outside a peripheral wall (9) of the connector (1) in at least one compression zones (104).

15. The method of claim 11, wherein the step of establishing a mechanical and electric connection is performed by inserting shear bolts into holes of a peripheral wall (9) of the connector (1).
